(19) Europäisches Patentamt
European Patent Office
Office européen des brevets

(11) **EP 4 354 319 A1**

(12) **EUROPEAN PATENT APPLICATION**

(43) Date of publication:
**17.04.2024  Bulletin 2024/16**

(21) Application number: **23155631.7**

(22) Date of filing: **08.02.2023**

(51) International Patent Classification (IPC):
**G06F 16/55** (2019.01)    **G06N 3/045** (2023.01)
**G06N 3/0464** (2023.01)    **G06N 3/096** (2023.01)
**G06N 3/09** (2023.01)

(52) Cooperative Patent Classification (CPC):
**G06N 3/096; G06F 16/55; G06N 3/045;
G06N 3/0464; G06N 3/09**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.10.2022  NL 2033265
07.02.2023  NL 2034110**

(71) Applicant: **NavInfo Europe B.V.
5657 DB Eindhoven (NL)**

(72) Inventors:
• **PADMANABHAN, Deepan Chakravarthi
5657 DB Eindhoven (NL)**
• **GOWDA, Shruthi
5657 DB Eindhoven (NL)**
• **ARANI, Elahe
5657 DB Eindhoven (NL)**
• **ZONOOZ, Bahram
5657 DB Eindhoven (NL)**

(74) Representative: **van Breda, Jacobus
Octrooibureau Los & Stigter B.V.
P.O. Box 20052
1000 HB Amsterdam (NL)**

Remarks:
Amended claims in accordance with Rule 137(2) EPC.

(54) **METHOD FOR LEVERAGING SHAPE INFORMATION IN FEW-SHOT LEARNING IN ARTIFICIAL NEURAL NETWORKS**

(57)    A computer-implemented method that provides a novel shape aware FSL framework, referred to as LS-FSL. In addition to the inductive biases associated with deep learning models, the method of the current invention introduces meaningful shape bias. The method of the current invention comprises the step of capturing the human behavior of recognizing objects by utilizing shape information. The shape information is distilled to address the texture bias of CNN-based models. During training, the model has two branches: RIN-branch, network with colored images as input, preferably RGB images, and SIN-branch, network with shape semantic-based input. Each branch incorporates a CNN backbone followed by a fully connected layer performing classification. RIN-branch and SIN-branch receive the RGB input image and shape information enhanced RGB input image, respectively. The training objective is to improve the classification performance of the RIN-branch and SIN-branch as well as to distill shape semantics from SIN-branch to RIN-branch. The features of the RIN-branch and SIN-branch are aligned to distill shape representation into RIN-branch. This feature alignment implicitly achieves a bias-alignment between the RIN and SIN. The learned representations are generic and remain invariant to common attributes.

Fig. 1

**Description**

The invention relates to a computer-implemented method for Leveraging Shape Information in Few-shot Learning (FSL) in artificial neural networks for enriching the performance of any Convolutional Neural Network-based (CNN) few-shot learning model.

Few-Shot Learning is an example of meta-learning, where a learner is trained on several related tasks, during the metatraining phase, so that it can generalize well to unseen (but related) tasks with just a few examples, during the meta-testing phase. Few-shot training stands in contrast to traditional methods of training machine learning models, where a large amount of training data is typically used. Few-shot learning is used primarily in Computer Vision. In other terms, few-shot learning is the approach of making predictions based on a limited number of samples. The goal of few-shot learning is not to let the model recognize the images in the training set and then generalize to the test set. Instead, the goal is "Learn to learn".

**General Description**

Humans learn to identify new objects from substantially fewer data, while machine learning models require a lot of data. Annotating enormous data is expensive in terms of time and human effort. In real-world scenarios, there is no access to multiple samples of the same class. The machine learning model must adapt and learn quickly using fewer samples. For example, annotating numerous objects to train a recognition model for autonomous driving applications under varying climatic conditions is highly challenging. To address these challenges, few-shot learning techniques aid in developing artificial intelligence (AI) models with the ability to generalize well on novel unseen examples using only a few samples.

Human visual system relies on global semantics such as shape information to recognize objects. However, Deep Neural Networks (DNN) majorly rely on local as well as trivial cues rather than global features. This attention to trivial cues serves as a shortcut during the learning stage. The shortcut learning biases the network to highly rely on local texture information as well as unintended spurious patterns for decision making. This considerably affects model generalization as well as robustness. With many state-of-the-art Few-shot Learning (FSL) models being CNN-based, the network is vulnerable to shortcut learning and susceptible to relying more on texture information [1]. Even though in standard classification setup, texture bias of CNNs aids in improving accuracy, in FSL the texture bias substantially affects the generalization [3]. The challenges in the few-shot setting such as distributional shift between train and test set [2], the lesser data scenario, and model overfitting to the fewer data aggravate the effects of texture bias. The model loses the ability to robustly generalize to novel few-shot classes. These challenges further increase the need for models that are less vulnerable to shortcuts and spurious patterns. On the other hand, humans look at global abstractions such as shape information to recognize objects. Various studies explore the utility of shape by infants [11] [12] and adults [1] to recognize objects. In the standard supervised learning setup with numerous annotated data, incorporating shape information into the backbone addresses the increased texture bias of CNNs [20]. The resulting model illustrates improved generalization as well as robustness to adversarial perturbations. In addition to the inductive biases of CNN, a shape bias is introduced in the few-shot learning setup to capture the human behavior of recognizing objects using global shape semantics. The method of the current invention comprises the step of forcing the network to concentrate on the implicit global shape information and produce better generic high-level representations. The learned global features help in improving the few-shot generalization and the network is less susceptible to overfitting due to limited samples. The methodology can be combined with any CNN-based model to mitigate the shortcut learning issue by incorporating shape information into the feature representations.

Various state-of-the-art FSL models [5] [6] [7] [8] improve performance by enriching the embedding model using knowledge distillation and incorporating certain inductive biases. It is an object of the current invention to enhance the representations learned by the embedding model by distilling shape information into the FSL model. This and other objects which will become apparent from the following disclosure, are provided with a computer-implemented method for continual learning in artificial neural networks, a computer-readable medium, and an autonomous vehicle comprising a data processing system, having the features of one or more of the appended claims.

*Knowledge Distillation in Few-shot Learning:*

Rethinking Few-Shot-Distill (RFS-Distill) [7] shifts the focus on developing a good base embedding model to improve FSL. Initially, the method trains a backbone to classify the train set categories. In the second stage, the acquired knowledge is distilled to a new feature extractor. This Born-Again distillation with feature normalization enhances the representations from the backbones up to a certain generation. Invariant and Equivariant Representations (IER-Distill) [6] incorporate both invariance and equivariance inductive biases of certain geometric transformations for few-shot learning. The features are independent of transformations and capture the data structure. IER-Distill employs a multi-head distillation over standard supervised distillation to achieve state-of-the-art results. Liu et al., [19] learn a model for few-shot classification using online self-distillation. The method unifies the two stages of RFS-Distill into one. The student model is updated using stochastic gradient descent (SGD) whereas the teacher model is continuously updated based on the student parameters without backpropagation. In addition, the work identifies CutMix augmentation aids in achieving state-of-the-art performance in various few-shot settings.

The method of the current invention comprises the step of utilizing knowledge distillation between the RGB image-based network (RIN) and the shape image-based network (SIN) to distill shape information in the pretraining stage. Whereas none of the above prior art methods integrate shape information between two networks.

*Overcoming Biases in Few-shot Learning:*

The biases affecting the generalization of conventional machine learning problem creates a larger impact in FSL setup. This is primarily due to evaluating FSL models with unseen novel categories. Ringer et al., [3] study the detrimental effect of texture bias illustrated by CNNs in FSL. The paper addresses the texture bias by modifying the training data with non-texture-based and texture-based images. On the other hand, the method of the current invention addresses the susceptibility to texture shortcut by directly incorporating shape information to the backbone in the learning phase.

Similarly, the image background serves as a shortcut in the FSL scenario and impacts the in-class classification performance. [4] mitigates the issue by sampling the foreground as well as the original images at both training and testing phases. The application proposes COSOC, a framework [4] to extract foreground images by focusing on the shared patterns among each class using contrastive learning and k-means clustering. In contrast to the method of the current invention, COSOC focuses on addressing the background shortcut by extracting foreground images.

In FSL, the embedding feature distribution is well-defined for base classes used for training. However, the feature distribution is affected by the domain shift incurred by the novel classes. [2] proposes Distribution Calibration Module (DCM) and Selected Sampling (SS) that mitigates class-agnostic and class-specific bias, respectively, at the meta-test phase. [2] exploits the texture biased features and does not take steps to curb shortcut learning.

*Incorporating Shape Bias:*

[5] illustrates the effectiveness of incorporating explicit shape bias for few-shot classification. The work contributes a synthetic 3D object dataset, Toys4K, covering 105 categories with 4179 object instances in total. The training procedure includes learning point cloud and image embeddings from point cloud as well as image data, respectively. DGCNN and ResNet18 with cross-entropy are used to train the embedding models. The evaluation incorporates the nearest centroid classifier of the average of both embeddings to the query image embedding. This method [5] of developing shape-aware FSL models have utilized 3D shape information along with image data to learn an embedding model and construct a Prototype classifier. The additional synthetic point cloud data reduces the applicability of the method [5]. The method of the current invention comprises the step of incorporating the shape bias solely using the shape information in the RGB input image.

In a first aspect of the invention, the computer-implemented method for capturing human-like object recognition in an artificial neural network comprising the step of training said network, wherein the step of training the network comprises the step of splitting said network during training into two branches:

- a RIN-branch wherein the network receives a colored image as input; and
- a SIN-branch wherein the network receives a shape semantic-based image as input,

wherein the method comprises the step of training the RIN-branch and the SIN-branch in parallel by calculating at least one alignment loss for distilling shape feature representations learned by the SIN-branch into the RIN-branch.

Advantageous embodiments are further defined hereinafter.

The method preferably comprises the step of obtaining the shape semantic-based image by using an edge detection algorithm, such as Sobel edge operator, on the colored image.

The method preferably comprises the step of providing the colored image as an RGB-based image. To be noted that said RGB-based image can be acquired by a camera, a video recorder, a scene recorder or any other type of image capturing device.

The method preferably comprises the steps of incorporating, at each branch, a backbone network for features extraction and a fully connected layer, after said backbone network, for performing classification.

The method preferably comprises the step of configuring the RIN-branch and the SIN-branch as feature extractor networks, such as ResNet12-based classifiers.

The step of calculating at least one alignment loss preferably comprises the step of calculating at least one feature alignment loss for distilling shape feature representations learned by the SIN-branch into the RIN-branch.

Advantageously, the step of calculating the at least one feature alignment loss comprises the step of calculating a mean squared error between feature embeddings of RIN-branch and feature embeddings of SIN-branch.

The step of calculating at least one alignment loss preferably comprises the step of calculating at least one decision alignment loss for aligning decision boundaries of the RIN-branch and the SIN-branch.

Advantageously, the step of calculating the at least one decision alignment loss comprises the step of calculating a relative entropy measure, such as Kullback-Leibler divergence, between activation functions in outputs of the RIN-branch and activation functions in outputs of the SIN-branch.

The method preferably comprises the steps of:

- calculating a cross-entropy loss over output of the RIN-branch; and
- calculating a cross-entropy loss over output of the SIN-branch.

The method preferably comprises a meta-test training phase, wherein said method comprises the step of training a logistic regression using the features extracted from the RIN-branch and a cross entropy loss.

In a second embodiment of the invention, the computer-readable medium is provided with a computer program wherein when said computer program is loaded and executed by a computer, said computer program causes the computer to carry out the steps of the computer-implemented method according to any one of aforementioned steps.

In a third embodiment of the invention, the autonomous vehicle comprising a data processing system loaded with a computer program wherein said program is arranged for causing the data processing system to carry out the steps of the computer-implemented method according to any one of aforementioned steps for enabling said autonomous vehicle to continually adapt and acquire knowledge from an environment surrounding said autonomous vehicle.

The invention will hereinafter be further elucidated with reference to the drawing of an exemplary embodiment of a computer-implemented method, a computer program and an autonomous vehicle comprising a data processing system according to the invention that is not limiting as to the appended claims.

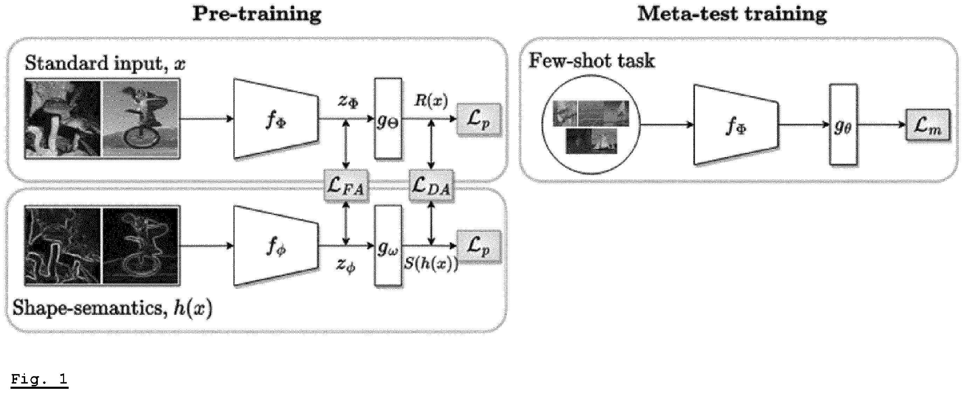

In the drawing, figure 1 shows a schematic diagram for the computer-implemented method according to the invention.

Whenever in the figures the same reference numerals are applied, these numerals refer to the same parts.

Detailed description

Generally, FSL for classification involves two steps: pretraining and meta-testing. In the pre-training step, a model M comprising of a backbone feature extractor $f_\phi$ and fully-connected layers $g_\Theta$ is trained on base classes Nb from a base dataset Db=(xi, yi) where i=1, 2, .., B. The classification loss function Lp and parameter regularization term $\Re$ used to pretrain the model is given by,

$$\mathcal{M} = \arg\min_{\Phi,\Theta} \mathbb{E}_{\mathcal{D}_b} \left[ \mathcal{L}_p \left( \mathcal{D}_b; \Phi, \Theta \right) \right] + \Re(\Phi, \Theta) \quad (1)$$

The pre-training strategy employs meta-learning [21, 22, 23] or standard supervised (non-meta) learning [6, 7] training setup. The meta-testing phase utilizes a dataset Dm with novel unseen classes to the classes in Db. The meta-testing or inference phase includes a series of few-shot tasks with data sampled from Dm. Each task contains a meta-test training and meta-test testing step using the support set S = Dtrain_I where i=1, 2, .., N and query set Q = Dtest_i where i=1, 2, .., N, respectively. N is the total number of tasks in meta-testing phase. Each support set contains Nf unique novel classes and kf examples per class. Thereby, each few-shot task is represented as Nf-way, kf-shot task.

In meta-test train phase, the pre-trained model M acts as a fixed feature extractor utilizing $f_\phi$ or fine-tuned by updating certain layers or the entire model in meta-testing. The embeddings from $f_\Phi$ are used to train a simple classifier $g_\theta$ such as logistic regressor or support vector machine [7]. Additionally in certain cases, the embeddings are classified using non-parametric classifiers like nearest neighbor by estimating class prototypes [23]. Lm is the loss function of the meta-test phase with parameter regularization $\Re$.

$$\Psi = \arg\min_{\Psi} \mathbb{E}_S \left[ \mathcal{L}_m \left( \mathcal{D}^{train}; \Psi \right) \right] + \Re(\Psi) \quad (2)$$

where $\Psi$ is given by,

$$\Psi = \begin{cases} [\Phi^T, \theta^T]^T & \text{if both } \Phi \text{ and } \theta \text{ are trainable} \\ [\theta] & \text{if } \theta \text{ is trainable} \\ [\Phi] & \text{if } \Phi \text{ is trainable} \end{cases} \qquad (3)$$

The overall objective is to minimize the average test error over the distribution of meta-test test set. The query set is sampled from the same distribution as the corresponding support set.

$$\mathbb{E}_Q\left[\mathcal{L}_m\left(\mathcal{D}^{test}; \Psi\right)\right] \qquad (4)$$

With the use of CNNs in majority of classification tasks [10], the models are prone to learn the local information [24]. This affects generalization substantially even with slightest perturbations, changes in background data, statistical irregularities, or color schemes. This effect is exacerbated further in the few-shot settings as the distribution shift between the training and testing class is more prevalent [3, 25]. This calls for a more robust model for few-shot learning. Unlike CNNs, human visual system is robust and recognizes objects under different conditions using less data. Studies have attributed this human behavior to the cognitive biases of human brain or prior knowledge gathered. The presence of cognitive biases aid in focusing on the global discriminative shape features for recognition [1, 11]. Motivated by this, we propose to impart an additional bias in the form of shape on top of the generic inductive biases of CNNs at the learning stage.

The method of the current invention, called LSFSL, is detailed hereinafter with reference to a preferred embodiment which cannot be deemed restrictive as to the appended claims, and in particular does not require the simultaneous application of all mentioned features. LSFSL embodies a computer-implemented method to develop shape-aware FSL models leveraging the implicit shape information present in an RGB input image. Unlike [5], the method of the current invention does not utilize any additional datasets to develop shape-aware models. The method of the current invention comprises the step of incorporating the shape information into the model during the pre-training stage. The method of the current invention comprises the step of synchronously training two networks: RIN (standard RGB Input Network) and SIN (Shape Input Network) by distilling shape knowledge between the networks [20]. Each network comprises a backbone feature extractor followed by fully-connected layers for classification. SIN network is fed with an image with enhanced shape-semantics to extract the shape information pertaining to the data. To extract the shape information, the method of the current invention comprises the step of employing Sobel edge operator [26] which identifies the shape information through discrete differentiation from the RGB input image in a computationally inexpensive way. As shown in Figure 1, a standard input image x and an image with shape semantics h(x) is passed to the networks RIN and SIN respectively. The method of the current invention comprises the step of employing two bias alignments to distill shape information from SIN to RIN: backbone feature alignment LFA and decision alignment LDA force RIN to focus on the enhanced shape semantics. This approach of learning the shape information along with the standard biases aids in achieving robust representation in the RIN network by aggregating information from RGB and edge input image.

Figure 1: The method of the current invention, LSFSL, pipeline illustrating the pre-training and the meta-test training pipeline. The shape bias is incorporated in the pre-training stage to address the few-shot model bias to texture. The shape semantics are obtained by applying a Sobel edge operator on the RGB input image. The meta-testing train stage fits a logistic regressor on the RGB image features from the RIN model.

The feature embeddings from RIN backbone $f\phi$ and SIN backbone $f\varphi$ for a batch of training images x are represented as $z\phi$ and $z\varphi$, respectively. The Sobel operated shape image is represented as h(x). The bias alignments are bi-directional as noticed SIN requires certain texture information to improve generalization (Equation 6) and the vice-versa distills shape knowledge to RIN (Equation 5).

$$\mathcal{L}_{FAR} = \mathbb{E}[\|z_\Phi - \text{stopgrad}(z_\phi)\|_2^2] \qquad (5)$$

$$\mathcal{L}_{FAS} = \mathbb{E}[\|\text{stopgrad}(z_\Phi) - z_\phi\|_2^2] \qquad (6)$$

Therefore, putting Equation 5 and Equation 6 together, a strict alignment of the backbone features of RIN and SIN is accomplished using mean squared error (MSE) as follow,

$$\mathcal{L}_{FA} = \gamma_r\mathcal{L}_{FAR} + \gamma_s\mathcal{L}_{FAS} \qquad (7)$$

where $\gamma r$ and $\gamma s$ control the influence of texture and shape respectively on the final loss. This alignment of backbone features ensures that the earlier stages of RIN are more shape-aware in the representation space. Therefore, the feature alignment captures the generic feature representations that are unaffected by changes in color schemes, perturbations, and backgrounds.

The decision alignment, LDA, is employed to align the decision boundary of RIN and SIN. Enhancing the decision boundary of RIN with SIN forces RIN to utilize shape information for classification. Hence, LDA forces RIN to be less susceptible to learning from the shortcut cues in the data such as color schemes and background information. The bi-directionality in decision alignment incorporates Kullback-Leibler divergence individually for each component as given in Equation 8 and Equation 9.

$$\mathcal{L}_{DAR} = \mathcal{D}_{KL}(\sigma(R(x))\|\text{stopgrad}(\sigma(S(h(x))))) \quad (8)$$

$$\mathcal{L}_{DAS} = \mathcal{D}_{KL}(\text{stopgrad}(\sigma(R(x)))\|\sigma(S(h(x)))) \quad (9)$$

$$\mathcal{L}_{DA} = \lambda_r \mathcal{L}_{DAR} + \lambda_s \mathcal{L}_{DAS} \quad (10)$$

where $R(x)$ and $S(h(x))$ are the output logits from RIN and SIN, respectively, $\sigma$ is softmax operator, $\lambda r$ and $\lambda s$ control the influence of distilling shape to RIN and texture to SIN, respectively. Therefore, decision alignment reduces the vulnerability of RIN to learning from superficial cues.

LCER and LCES are the cross-entropy loss for classifying the input images by RIN and SIN, respectively. This standard supervision loss improves the generalization of both the networks. The overall loss for training shape-aware FSL model using LSFSL is given by,

$$\mathcal{L} = \mathcal{L}_{CER} + \mathcal{L}_{CES} + \mathcal{L}_{DA} + \mathcal{L}_{FA} \quad (11)$$

The alignment loss factors are dynamically weighted depending on the training epoch and the alignment type. The meta-testing phase utilizes only the shape-aware RIN model that aggregated shape information in addition to other inductive biases. This type of training is a generic procedure and extendable to both meta or non-meta learning-based models.

The computer-implemented method of the current invention, LSFSL-Simple, is clearly illustrated in Algorithm 1. The model trained using Algorithm 1 can be enhanced using sequential knowledge distillation [7] (Algorithm 2) or online self-distillation [19] (Algorithm 3).

---

**Algorithm 1** LSFSL-Simple: Stage 1 Training Algorithm

---

**Input:** dataset $\mathcal{D}$, randomly initialized RIN model $R$ with feature extractor $f_\Phi$ and classifier $g_\Theta$, randomly initialized SIN model $S$ with feature extractor $f_\phi$ and classifier $g_\omega$, epochs $E$, softmax operator $\sigma$, stopgrad operator $SG$, cross-entropy loss $CE$, Kullback-Leibler divergence loss $KLD$, mean square error $MSE$, Sobel edge operator $h$, feature alignment loss factors $(\gamma_r, \gamma_r)$, decision alignment loss factors $(\lambda_r, \lambda_s)$

1: **for** epoch $e \in \{1, 2, .., E\}$ **do**
2:     sample a mini-batch $(x, y) \sim \mathcal{D}$
3:     $x_{shape} = h(x)$
4:     $z_\Phi = f_\Phi(x)$
5:     $z_\phi = f_\phi(x_{shape})$
6:     $R(x) = g_\Theta(f_\Phi(x))$
7:     $S(h(x)) = g_\omega(f_\phi(h(x_{shape})))$
8:     $\mathcal{L}_{CER} = CE(\sigma(R(x)), y)$
9:     $\mathcal{L}_{CES} = CE(\sigma(S(h(x))), y)$
10:     $\mathcal{L}_{FAR} = MSE(z_\Phi, SG(z_\phi))$       ▷ (Eq. 5)
11:     $\mathcal{L}_{FAS} = MSE(SG(z_\Phi), z_\phi)$       ▷ (Eq. 6)
12:     $\mathcal{L}_{FA} = \gamma_r \mathcal{L}_{FAR} + \gamma_s \mathcal{L}_{FAS}$       ▷ (Eq. 7)
13:     $\mathcal{L}_{DAR} = KLD(\sigma(R(x))), SG(\sigma(S(h(x))))$   ▷ (Eq. 8)
14:     $\mathcal{L}_{DAS} = KLD(SG(\sigma(R(x))), \sigma(S(h(x))))$   ▷ (Eq. 9)
15:     $\mathcal{L}_{DA} = \lambda_r \mathcal{L}_{DAR} + \lambda_s \mathcal{L}_{DAS}$       ▷ (Eq. 10)
16:     $\mathcal{L} = \mathcal{L}_{CER} + \mathcal{L}_{CES} + \mathcal{L}_{FA} + \mathcal{L}_{DA}$       ▷ (Eq. 11)
17:     Update parameters of $R$ and $S$ based on $\mathcal{L}$ using Stochastic Gradient Descent (SGD)
18: **end for**
19: **return** RIN model $R$

---

---
**Algorithm 2** LSFSL-Distill: Stage 2 Training Algorithm

---

**Input:** dataset $\mathcal{D}$, stage 1 trained and fixed RIN model $R_t$ with feature extractor $f_t$ and classifier $g_t$, randomly initialized student RIN model $R_s$ with feature extractor $f_t$ and classifier $g_t$, epochs $E$, softmax operator $\sigma$, cross-entropy loss $CE$, Kullback-Leibler divergence loss $KLD$, cross-entropy loss factor $\alpha$, teacher-student decision alignment loss factor $\beta$

1: **for** epoch $e \in \{1, 2, .., E\}$ **do**
2:     sample a mini-batch $(x, y) \sim \mathcal{D}$
3:     $R_t(x) = g_t(f_t(x))$
4:     $R_s(x) = g_s(f_s(x))$
5:     $\mathcal{L}_{CE} = CE(R_s(x), y)$
6:     $\mathcal{L}_{DA} = KLD(R_t(x), R_s(x))$
7:     $\mathcal{L} = \alpha\mathcal{L}_{CE} + \beta\mathcal{L}_{DA}$
8:     Update parameters of $R_s$ based on $\mathcal{L}$ using Stochastic Gradient Descent (SGD)
9: **end for**
10: **return** RIN student model $R_s$

---

---

**Algorithm 3** LSFSL-Online: Training Algorithm

---

**input:** dataset $\mathcal{D}$, randomly initialized RIN model $R$ with feature extractor $f_\Phi$ and classifier $g_\Theta$, randomly initialized SIN model $S$ with feature extractor $f_\phi$ and classifier $g_\omega$, randomly initialized and fixed teacher RIN model $R_t$ with feature extractor $f_{t,\Phi}$ and classifier $g_{t,\Theta}$, epochs $E$, softmax operator $\sigma$, stopgrad operator $SG$, cross-entropy loss $CE$, Kullback-Leibler divergence loss $KLD$, mean square error $MSE$, Sobel edge operator $h$, feature alignment loss factors $(\gamma_r, \gamma_r)$, decision alignment loss factors $(\lambda_r, \lambda_s)$, teacher-student decision alignment loss factor $\beta$

1: **for** epoch $e \in \{1, 2, ..., E\}$ **do**
2:     sample a mini-batch $(x, y) \sim \mathcal{D}$
3:     $x_{shape} = h(x)$
4:     $z_\Phi = f_\Phi(x)$
5:     $z_\phi = f_\phi(x_{shape})$
6:     $R(x) = g_\Theta(f_\Phi(x))$
7:     $S(h(x)) = g_\omega(f_\phi(h(x_{shape})))$
8:     $R_t(x) = g_{t,\Theta}(f_{t,\Phi}(x))$
9:     $\mathcal{L}_{CER} = CE(\sigma(R(x)), y)$
10:    $\mathcal{L}_{CES} = CE(\sigma(S(h(x))), y)$
11:    $\mathcal{L}_{FAR} = MSE(z_\Phi, SG(z_\phi))$        ▷ (Eq. 5)
12:    $\mathcal{L}_{FAS} = MSE(SG(z_\Phi), z_\phi)$        ▷ (Eq. 6)
13:    $\mathcal{L}_{FA} = \gamma_r \mathcal{L}_{FAR} + \gamma_s \mathcal{L}_{FAS}$      ▷ (Eq. 7)
14:    $\mathcal{L}_{DAR} = KLD(\sigma(R(x)), SG(\sigma(S(h(x))))$  ▷ (Eq. 8)
15:    $\mathcal{L}_{DAS} = KLD(SG(\sigma(R(x))), \sigma(S(h(x))))$  ▷ (Eq. 9)
16:    $\mathcal{L}_{DA} = \lambda_r \mathcal{L}_{DAR} + \lambda_s \mathcal{L}_{DAS}$     ▷ (Eq. 10)
17:    $\mathcal{L}_{TS} = KLD(\sigma(R(x)), \sigma(R_t(x)))$
18:    $\mathcal{L} = \mathcal{L}_{CER} + \mathcal{L}_{CES} + \mathcal{L}_{FA} + \mathcal{L}_{DA} + \beta\mathcal{L}_{TS}$
19:    Update parameters of $R$ and $S$ based on $\mathcal{L}$ using Stochastic Gradient Descent
20:    Update $R_t$ as EMA of $R$
21: **end for**
22: **return** RIN student model $R$

---

Embodiments of the present invention can include every combination of features that are disclosed herein independently from each other.

Typical application areas of the invention include, but are not limited to:

- Road condition monitoring
- Road signs detection
- Parking occupancy detection
- Defect inspection in manufacturing
- Insect detection in agriculture
- Aerial survey and imaging

Although the invention has been discussed in the foregoing with reference to an exemplary embodiment of the method of the invention, the invention is not restricted to this particular embodiment which can be varied in many ways without departing from the invention. The discussed exemplary embodiment shall therefore not be used to construe the append-ed claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

Variations and modifications of the present invention will be obvious to those skilled in the art and it is intended to cover in the appended claims all such modifications and equivalents. The entire disclosures of all references, applications, patents, and publications cited above are hereby incorporated by reference. Unless specifically stated as being "essential" above, none of the various components or the interrelationship thereof are essential to the operation of the invention. Rather, desirable results can be achieved by substituting various components and/or reconfiguration of their relationships with one another.

Optionally, embodiments of the present invention can include a general or specific purpose computer or distributed system programmed with computer software implementing steps described above, which computer software may be in any appropriate computer language, including but not limited to C++, FORTRAN, ALGOL, BASIC, Java, Python, Linux, assembly language, microcode, distributed programming languages, etc. The apparatus may also include a plurality of such computers / distributed systems (e.g., connected over the Internet and/or one or more intranets) in a variety of hardware implementations. For example, data processing can be performed by an appropriately programmed microprocessor, computing cloud, Application Specific Integrated Circuit (ASIC), Field Programmable Gate Array (FPGA), or the like, in conjunction with appropriate memory, network, and bus elements. One or more processors and/or microcontrollers can operate via instructions of the computer code and the software is preferably stored on one or more tangible nontransitive memory-storage devices.

References:

1. R. Geirhos, P. Rubisch, C. Michaelis, M. Bethge, F. A. Wichmann, and W. Brendel. Imagenet trained cnns are biased towards texture; increasing shape bias improves accuracy and robustness. In International Conference on Learning Representations (ICLR). OpenReview.net, 2019. URL 220 https://openreview.net/forum?id=Bygh9j09KX.

2. R. Tao, H. Zhang, Y. Zheng, and M. Savvides. Powering Finetuning for Few-shot Learning: Domain-Agnostic Bias Reduction with Selected Sampling. Association for the Advancement of Artificial Intelligence (AAAI), 2022. URL https://www.aaai.org/AAAI22Papers/AAAI-2032.TaoR.pdf.

3. S. Ringer, W. Williams, T. Ash, R. Francis, and D. MacLeod. Texture Bias Of CNNs Limits Few-Shot Classification Performance. CoRR, abs/1910.08519, 2019. URL http://arxiv.org/abs/1910.08519.

4. X. Luo, L. Wei, L. Wen, J. Yang, L. Xie, Z. Xu, and Q. Tian. Rectifying the Shortcut Learning of Background: Shared Object Concentration for Few-Shot Image Recognition. CoRR, abs/2107.07746, 2021. URL https://arxiv.org/abs/2107.07746.

5. S. Stojanov, A. Thai, and J. M. Rehg. Using Shape To Categorize: Low-Shot Learning With an Explicit Shape Bias. In IEEE Conference on Computer Vision and Pattern Recognition (CVPR), pages 1798-1808. Computer Vision Foundation / IEEE, 2021. URL https://doi.org/10.1109/CVPR46437.2021.00184.

6. M. N. Rizve, S. H. Khan, F. S. Khan, and M. Shah. Exploring Complementary Strengths of Invariant and Equivariant Representations for Few-Shot Learning. In IEEE Conference on Computer Vision and Pattern Recognition (CVPR), pages 10836-10846. Computer Vision Foundation / IEEE, 2021. URL https://doi.org/10.1109/CVPR46437.2021.01069.

7. Y. Tian, Y. Wang, D. Krishnan, J. B. Tenenbaum, and P. Isola. Rethinking Few-Shot Image Classification: A Good Embedding is All You Need? In A. Vedaldi, H. Bischof, T. Brox, and J. Frahm, editors, European Conference in Computer Vision (ECCV), volume 12359 of Lecture Notes in Computer Science, pages 266-282. Springer, 2020. URL https://doi.org/10.1007/978-3-030-58568-6 16.

8. Y. Wang, W. Chao, K. Q. Weinberger, and L. van der Maaten. Simpleshot: Revisiting nearest neighbor classification for few-shot learning. CoRR, abs/1911.04623, 2019. URL http://arxiv.org/abs/1911.04623.

9. Y. Wang, Q. Yao, J. T. Kwok, and L. M. Ni. Generalizing from a Few Examples: A Survey on Few-shot Learning. ACM Comput. Surv., 53(3) :63:1-63:34, 2020. URL https://doi.org/10.1145/3386252.

10. Y. Song, T. Wang, S. K. Mondal, and J. P. Sahoo. A Comprehensive Survey of Few-shot Learning: Evolution, Applications, Challenges, and Opportunities. CoRR, abs/2205.06743, 2022. URL https://doi.org/10.48550/arXiv.2205.06743.

11. B. Landau, L. B. Smith, and S. S. Jones. The importance of shape in early lexical learning. Cognitive Development, 3(3) :299-321, 1988. ISSN 0885-2014. URL https://doi.org/10.1016/0885-2014(88)90014-7.

12. G. Diesendruck and P. Bloom. How specific is the shape bias? Child development, 74:168-78, 02 2003. URL https://doi.org/10.1111/1467-8624.00528.

13. C. Finn, P. Abbeel, and S. Levine. Model-Agnostic Meta-Learning for Fast Adaptation of Deep Networks. In D.

Precup and Y. W. Teh, editors, International Conference on Machine Learning (ICML), volume 70 of Proceedings of Machine Learning Research, pages 1126-1135. PMLR, 2017. URL http://proceedings.mlr.press/v70/finn17a.html.

14. S. Beaulieu, L. Frati, T. Miconi, J. Lehman, K. O. Stanley, J. Clune, and N. Cheney. Learning to Continually Learn. In G. D. Giacomo, A. Catalá, B. Dilkina, M. Milano, S. Barro, A. Bugarin, and J. Lang, editors, European Conference on Artificial Intelligence (ECAI 2020) - Conference on Prestigious Applications of Artificial Intelligence (PAIS 2020), volume 325 of Frontiers in Artificial Intelligence and Applications, pages 992-1001. IOS Press, 2020. URL https://doi.org/10.3233/FAIA200193.

15. S. Ravi and H. Larochelle. Optimization as a Model for Few-Shot Learning. In International Conference on Learning Representations (ICLR). OpenReview.net, 2017. URL https://openreview.net/forum?id=rJY0-Kcll.

16. S. Baik, M. Choi, J. Choi, H. Kim, and K. M. Lee. Meta-Learning with Adaptive Hyperparameters. In H. Larochelle, M. Ranzato, R. Hadsell, M. Balcan, and H. Lin, editors, Neural Information Processing Systems (NeurIPS), 2020. URL https://proceedings.neurips.cc/paper/2020/hash/ee89223a2b 625b5152132ed77abbcc79-Abstract.html.

17. B. Hariharan and R. B. Girshick. Low-Shot Visual Recognition by Shrinking and Hallucinating Features. In IEEE International Conference on Computer Vision (ICCV), pages 3037-3046. IEEE Computer Society, 2017. URL https://doi.org/10.1109/ICCV.2017.328.

18. M. Hou and I. Sato. A closer look at prototype classifier for few-shot image classification. CoRR, abs/2110.05076, 2021. URL https://arxiv.org/abs/2110.05076.

19. S. Liu and Y. Wang. Few-shot Learning with Online Self-Distillation. In IEEE/CVF International Conference on Computer Vision Workshops (ICCVW), pages 1067-1070. IEEE, 2021. URL https://doi.org/10.1109/ICCVW54120.2021.00124.

20. Shruthi Gowda, Bahram Zonooz, and Elahe Arani. InBiaseD: Inductive Bias Distillation to Improve Generalization and Robustness through Shape-awareness. arXiv preprint arXiv:2206.05846, 2022.

## Claims

1. Computer-implemented method for capturing human-like object recognition in an artificial neural network comprising the step of training said network, **characterized in that** the step of training the network comprises the step of splitting said network during training into two branches:

   - a RGB image-based network (RIN) -branch wherein the network receives a colored image as input; and
   - a shape image-based network (SIN) -branch wherein the network receives a shape semantic-based image as input,

   wherein the method comprises the step of training the RIN-branch and the SIN-branch in parallel by calculating bias alignment losses for distilling shape information learned by the SIN-branch into the RIN-branch and for distilling texture information learned by the RIN-branch into the SIN-branch.

2. Computer-implemented method of claim 1, **characterized in that** the method comprises the step of obtaining said shape semantic-based image by using an edge detection algorithm, such as a Sobel edge operator, on said colored image.

3. Computer-implemented method of claim 1 or 2, **characterized in that** the method comprises the step of providing the colored image as an RGB-based image.

4. Computer-implemented method of any one of the preceding claims, **characterized in that** the method comprises the steps of incorporating in the RIN-branch and in the SIN-branch a backbone network for feature extraction and a fully connected layer, after said backbone network, for performing classification.

5. Computer-implemented method of any one of the preceding claims, **characterized in that** the method comprises the step of configuring the RIN-branch and the SIN-branch as feature extractor networks, such as ResNet12-based classifiers.

6. Computer-implemented method of any one of the preceding claims, **characterized in that** the step of calculating bias alignment losses comprises the step of calculating at least one feature alignment loss for distilling shape information learned by the SIN-branch into the RIN-branch and for distilling texture information learned by the RIN-branch into the SIN-branch.

7.  Computer-implemented method of claim 6, **characterized in that** the step of calculating the at least one feature alignment loss comprises the step of calculating a mean squared error between weighted feature embeddings of the RIN-branch and weighted feature embeddings of the SIN-branch.

8.  Computer-implemented method of any one of the preceding claims, **characterized in that** the step of calculating bias alignment losses comprises the step of calculating at least one decision alignment loss for aligning decision boundaries of the RIN-branch and the SIN-branch.

9.  Computer-implemented method of claim 8, **characterized in that** the step of calculating the at least one decision alignment loss comprises the step of calculating for each branch a relative entropy measure, such as a Kullback-Leibler divergence, between activation functions in outputs of the RIN-branch and activation functions in outputs of the SIN-branch.

10.  Computer-implemented method of claim 8 or 9, **characterized in that** the step of calculating the step of calculating for each branch a relative entropy measure comprises the steps of

- weighting the relative entropy measure of the RIN-branch to control shape distilling from the SIN-branch into the RIN-branch; and
- weighting the relative entropy measure of the SIN-branch to control texture distilling from the RIN-branch into the SIN-branch.

11.  Computer-implemented method of any one of the preceding claims, **characterized in that** the method comprises the steps of:

- calculating a cross-entropy loss over output of the RIN-branch; and
- calculating a cross-entropy loss over output of the SIN-branch.

12.  Computer-implemented method of any one of the preceding claims, **characterized in that** the method comprises a meta-test training phase, wherein said method comprises the step of fitting a logistic regression on the features of the RGB-image extracted from the RIN-branch and a cross entropy loss.

13.  A computer-readable medium provided with a computer program, **characterized in that** when said computer program is loaded and executed by a computer, said computer program causes the computer to carry out the steps of the computer-implemented method according to any one of claims 1-12.

14.  An autonomous vehicle comprising a data processing system loaded with a computer program, **characterized in that** said program is arranged for causing the data processing system to carry out the steps of the computer-implemented method according to any one of claim 1-12 for enabling said autonomous vehicle to continually identify and classify objects from an environment surrounding said autonomous vehicle.

**Amended claims in accordance with Rule 137(2) EPC.**

1.  Computer-implemented method for capturing human-like object recognition in an artificial neural network comprising the step of training said network, **characterized in that** the step of training the network comprises the step of splitting said network during training into two branches:

- a RGB image-based network (RIN) -branch wherein the network receives a colored image as input; and
- a shape image-based network (SIN) -branch wherein the network receives a shape semantic-based image as input,
wherein the method comprises the step of training the RIN-branch and the SIN-branch in parallel by calculating bias alignment losses for distilling shape information learned by the SIN-branch into the RIN-branch and for distilling texture information learned by the RIN-branch into the SIN-branch,
wherein the step of calculating bias alignment losses comprises the step of calculating at least one feature alignment loss for distilling shape information learned by the SIN-branch into the RIN-branch and for distilling texture information learned by the RIN-branch into the SIN-branch, wherein the step of calculating the at least one decision alignment loss comprises the step of calculating for each branch a relative entropy measure, such as a Kullback-Leibler divergence, between activation functions in outputs of the RIN-branch and activation functions in outputs of the SIN-branch, and wherein the step of calculating for each branch a relative entropy measure comprises the steps of

- weighting the relative entropy measure of the RIN-branch to control shape distilling from the SIN-branch into the RIN-branch; and
- weighting the relative entropy measure of the SIN-branch to control texture distilling from the RIN-branch into the SIN-branch.

2. Computer-implemented method of claim 1, **characterized in that** the method comprises the step of obtaining said shape semantic-based image by using an edge detection algorithm, such as a Sobel edge operator, on said colored image.

3. Computer-implemented method of claim 1 or 2, **characterized in that** the method comprises the step of providing the colored image as an RGB-based image.

4. Computer-implemented method of any one of the preceding claims, **characterized in that** the method comprises the steps of incorporating in the RIN-branch and in the SIN-branch a backbone network for feature extraction and a fully connected layer, after said backbone network, for performing classification.

5. Computer-implemented method of any one of the preceding claims, **characterized in that** the method comprises the step of configuring the RIN-branch and the SIN-branch as feature extractor networks, such as ResNet12-based classifiers.

6. Computer-implemented method of claim 6, **characterized in that** the step of calculating the at least one feature alignment loss comprises the step of calculating a mean squared error between weighted feature embeddings of the RIN-branch and weighted feature embeddings of the SIN-branch.

7. Computer-implemented method of any one of the preceding claims, **characterized in that** the step of calculating bias alignment losses comprises the step of calculating at least one decision alignment loss for aligning decision boundaries of the RIN-branch and the SIN-branch.

8. Computer-implemented method of any one of the preceding claims, **characterized in that** the method comprises the steps of:

   - calculating a cross-entropy loss over output of the RIN-branch; and
   - calculating a cross-entropy loss over output of the SIN-branch.

9. Computer-implemented method of any one of the preceding claims, **characterized in that** the method comprises a meta-test training phase, wherein said method comprises the step of fitting a logistic regression on the features of the RGB-image extracted from the RIN-branch and a cross entropy loss.

10. A computer-readable medium provided with a computer program, **characterized in that** when said computer program is loaded and executed by a computer, said computer program causes the computer to carry out the steps of the computer-implemented method according to any one of claims 1-12.

11. An autonomous vehicle comprising a data processing system loaded with a computer program, **characterized in that** said program is arranged for causing the data processing system to carry out the steps of the computer-implemented method according to any one of claim 1-12 for enabling said autonomous vehicle to continually identify and classify objects from an environment surrounding said autonomous vehicle.

Fig. 1

Europäisches Patentamt
European Patent Office
Office européen des brevets

# EUROPEAN SEARCH REPORT

Application Number

EP 23 15 5631

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Gowda Gowda Shruthi Shruthi ET AL: "InBiaseD: Inductive Bias Distillation to Improve Generalization and Robustness through Shape-awareness", , 12 June 2022 (2022-06-12), XP093052817, DOI: 10.48550/arxiv.2206.05846 Retrieved from the Internet: URL:https://arxiv.org/pdf/2206.05846.pdf [retrieved on 2023-06-08] * the whole document * ----- | 1-14 | INV. G06F16/55 G06N3/045 G06N3/0464 G06N3/096 G06N3/09 |
|  |  |  | TECHNICAL FIELDS SEARCHED (IPC) |
|  |  |  | G06F G06N |

The present search report has been drawn up for all claims

| Place of search | Date of completion of the search | Examiner |
|---|---|---|
| The Hague | 8 June 2023 | Ntarlagiannis, V |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. GEIRHOS ; P. RUBISCH ; C. MICHAELIS ; M. BETHGE ; F. A. WICHMANN ; W. BRENDEL.** Imagenet trained cnns are biased towards texture; increasing shape bias improves accuracy and robustness. *In International Conference on Learning Representations (ICLR),* 2019, https://openreview.net/forum?id=Bygh9j09KX
- **R. TAO ; H. ZHANG ; Y. ZHENG ; M. SAVVIDES.** Powering Finetuning for Few-shot Learning: Domain-Agnostic Bias Reduction with Selected Sampling. *Association for the Advancement of Artificial Intelligence (AAAI),* 2022, https://www.aaai.org/AAAI22Papers/AAAI-2032.Tao R.pdf
- **S. RINGER ; W. WILLIAMS ; T. ASH ; R. FRANCIS ; D. MACLEOD.** Texture Bias Of CNNs Limits Few-Shot Classification Performance. *CoRR,* 2019, http://arxiv.org/abs/1910.08519
- **X. LUO ; L. WEI ; L. WEN ; J. YANG ; L. XIE ; Z. XU ; Q. TIAN.** Rectifying the Shortcut Learning of Background: Shared Object Concentration for Few-Shot Image Recognition. *CoRR,* 2021, https://arxiv.org/abs/2107.07746
- Using Shape To Categorize: Low-Shot Learning With an Explicit Shape Bias. **S. STOJANOV ; A. THAI ; J. M. REHG.** In IEEE Conference on Computer Vision and Pattern Recognition (CVPR). Computer Vision Foundation / IEEE, 2021, 1798-1808
- Exploring Complementary Strengths of Invariant and Equivariant Representations for Few-Shot Learning. **M. N. RIZVE ; S. H. KHAN ; F. S. KHAN ; M. SHAH.** IEEE Conference on Computer Vision and Pattern Recognition (CVPR). Computer Vision Foundation / IEEE, 2021, 10836-10846
- Rethinking Few-Shot Image Classification: A Good Embedding is All You Need?. **Y. TIAN ; Y. WANG ; D. KRISHNAN ; J. B. TENENBAUM ; P. ISOLA.** European Conference in Computer Vision (ECCV). Springer, 2020, vol. 12359, 266-282
- **Y. WANG ; W. CHAO ; K. Q. WEINBERGER ; L. VAN DER MAATEN.** Simpleshot: Revisiting nearest neighbor classification for few-shot learning. *CoRR,* 2019, http://arxiv.org/abs/1911.04623
- **Y. WANG ; Q. YAO ; J. T. KWOK ; L. M. NI.** Generalizing from a Few Examples: A Survey on Few-shot Learning. *ACM Comput. Surv.,* 2020, vol. 53 (3), 63-1, 63-34, https://doi.org/10.1145/3386252

- **Y. SONG ; T. WANG ; S. K. MONDAL ; J. P. SAHOO.** A Comprehensive Survey of Few-shot Learning: Evolution, Applications, Challenges, and Opportunities. *CoRR,* 2022, https://doi.org/10.48550/arXiv.2205.06743
- **B. LANDAU ; L. B. SMITH ; S. S. JONES.** The importance of shape in early lexical learning. *Cognitive Development,* 1988, vol. 3 (3), ISSN 0885-2014, 299-321, https://doi.org/10.1016/0885-2014(88)90014-7
- **G. DIESENDRUCK ; P. BLOOM.** How specific is the shape bias?. *Child development,* February 2003, vol. 74, 168-78, https://doi.org/10.1111/1467-8624.00528
- Model-Agnostic Meta-Learning for Fast Adaptation of Deep Networks. **C. FINN ; P. ABBEEL ; S. LEVINE.** International Conference on Machine Learning (ICML). PMLR, 2017, vol. 70, 1126-1135
- Learning to Continually Learn. **S. BEAULIEU ; L. FRATI ; T. MICONI ; J. LEHMAN ; K. O. STANLEY ; J. CLUNE ; N. CHENEY.** European Conference on Artificial Intelligence (ECAI 2020) - Conference on Prestigious Applications of Artificial Intelligence (PAIS 2020). IOS Press, 2020, vol. 325, 992-1001
- **S. RAVI ; H. LAROCHELLE.** Optimization as a Model for Few-Shot Learning. *International Conference on Learning Representations (ICLR),* 2017, https://openreview.net/forum?id=rJY0-Kcll
- Meta-Learning with Adaptive Hyperparameters. **S. BAIK ; M. CHOI ; J. CHOI ; H. KIM ; K. M. LEE.** Neural Information Processing Systems (NeurIPS). 2020
- Low-Shot Visual Recognition by Shrinking and Hallucinating Features. **B. HARIHARAN ; R. B. GIRSHICK.** IEEE International Conference on Computer Vision (ICCV). IEEE Computer Society, 2017, 3037-3046
- **M. HOU ; I. SATO.** A closer look at prototype classifier for few-shot image classification. *CoRR,* 2021, https://arxiv.org/abs/2110.05076
- Few-shot Learning with Online Self-Distillation. **S. LIU ; Y. WANG.** IEEE/CVF International Conference on Computer Vision Workshops (ICCVW). IEEE, 2021, 1067-1070
- **SHRUTHI GOWDA ; BAHRAM ZONOOZ ; ELAHE ARANI.** InBiaseD: Inductive Bias Distillation to Improve Generalization and Robustness through Shape-awareness. *arXiv:2206.05846,* 2022